# EUROPEAN PATENT SPECIFICATION

(11) **EP 3 333 294 B1**
(45) Date of publication and mention of the grant of the patent: **05.02.2020**
(21) Application number: 17205985.9
(22) Date of filing: 07.12.2017
(51) Int. Cl.: D04H 1/4242, B64D 45/02, B82Y 30/00

(54) **PRESSURIZED REDUCTION OF CNT RESISTIVITY**
DRUCKVERMINDERUNG VON CNT-RESISTIVITÄT
RÉDUCTION SOUS PRESSION DE LA RÉSISTIVITÉ DE CNT

(30) Priority: 08.12.2016 US 201615373370
(43) Date of publication of application: 13.06.2018
(73) Proprietor: Goodrich Corporation, Charlotte, NC 28217-4578 (US)
(72) Inventor: HU, Jin, Hudson, OH Ohio 44236 (US); BOTURA, Galdemir Cezar, Akron, OH Ohio 44313 (US); SLANE, Casey, Richwood, OH Ohio 43344 (US); CHING, Nathaniel, Hartville, OH Ohio 44632 (US)
(74) Representative: Dehns

(56) References cited:
- EP-A2- 2 289 803
- US-A1- 2003 198 812
- US-A1- 2009 140 098
- US-A1- 2013 157 001

## Description

### BACKGROUND

Carbon nanotubes (CNTs) are carbon allotropes having a generally cylindrical nanostructure. They have unusual properties that make them valuable for many different technologies. For instance, some CNTs can have high thermal and electrical conductivity, making them suitable for replacing metal heating elements. Due to their much lighter mass, substituting CNTs for metal heating components can reduce the overall weight of a heating component significantly. This makes the use of CNTs of particular interest for applications where weight is critical, such as in aerospace and aviation technologies.

Carbon nanotubes are commercially available in several different forms. One such form is as a pure carbon nanotube nonwoven sheet material (CNT-NSM). In a CNT-NSM, carbon nanotubes are arranged together to form a sheet. No adhesives or polymers are used to attach CNTs to one another in a CNT-NSM. Instead, CNT particles are attached to one another via Van der Waals forces. However, the electrical conductivity of these commercially available, off-the-shelf CNT-NSMs is generally in the range of 350-400 S/cm or lower. This level of electrical conductivity is not suitable for many aerospace heating applications (e.g., anti-icing and de-icing). Thus, commercially available CNT-NSMs cannot currently be used as a substitute for metal heating elements.

### SUMMARY

A method for reducing the resistivity of a carbon nanotube nonwoven sheet includes providing a carbon nanotube nonwoven sheet comprising a plurality of carbon nanotubes, applying pressure to the carbon nanotube nonwoven sheet to reduce air voids between carbon nanotubes within the carbon nanotube nonwoven sheet, and heating the carbon nanotube nonwoven sheet, wherein the steps of applying pressure to the carbon nanotube nonwoven sheet and heating the carbon nanotube nonwoven sheet occur simultaneously.

### BRIEF DESCRIPTION OF THE DRAWINGS

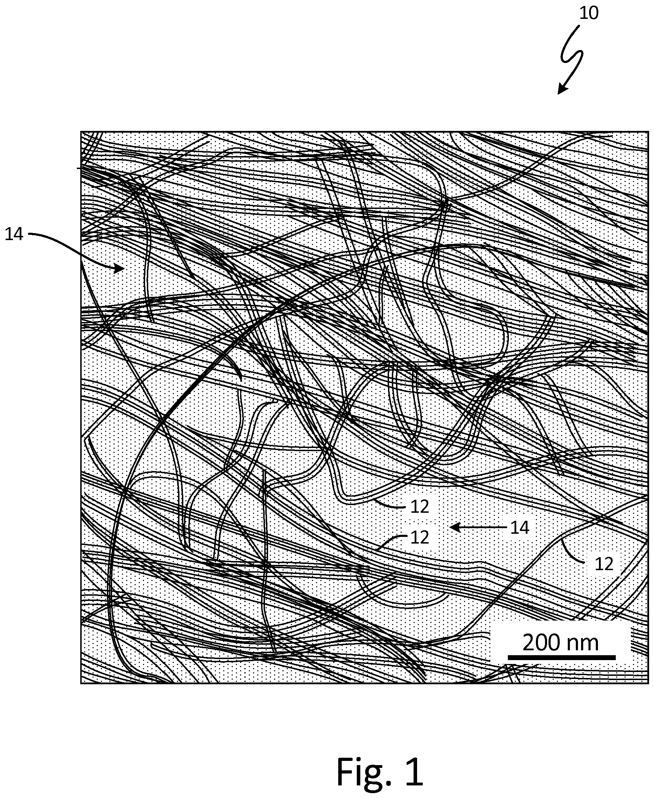

The Figure is a schematic view of a magnified portion of a carbon nanotube nonwoven sheet material (CNT-NSM).

### DETAILED DESCRIPTION

This disclosure provides methods for reducing the resistivity of a carbon nanotube (CNT) nonwoven sheet material (CNT-NSM). The resistivity of a CNT-NSM is reduced by removing air voids between CNTs within the CNT-NSM. Air voids are removed from the CNT-NSM by the application of pressure to the CNT-NSM. The disclosed methods allow for the improvement of CNT heating elements without the addition of mass or the addition of functional groups using chemical processes.

The Figure schematically illustrates one example of a portion of a carbon nanotube nonwoven sheet. CNT nonwoven sheet 10 includes a plurality of carbon nanotubes (CNTs) 12 that are attached together to form sheet 10. CNT nonwoven sheet 10 is generally manufactured as a flat sheet or tape that is very thin, as thin as or thinner than the thickness of an ordinary sheet of paper (about 0.07 to 0.18 millimeters). The length and width of sheet 10 can vary depending on manufacturer or customer selection. The Figure schematically illustrates a magnified view of sheet 10 to illustrate individual CNTs 12.

In some embodiments, CNT nonwoven sheet 10 includes only carbon nanotubes 12 and sheet 10 is free of the adhesives, resins and polymers that are often used as a matrix that incorporate CNT particles. In these cases of pure CNT-NSMs, CNTs 12 are held together by Van der Waals forces or interactions. Van der Waals forces are non-covalent and non-ionic attractive forces between CNTs caused by fluctuating polarizations of the CNTs. Individual carbon nanotubes 12 can align themselves by pi-stacking, one type of Van der Waal interaction. Pi-stacking refers to attractive, non-covalent interactions between aromatic rings that occur due to the presence of pi bonds. As each carbon ring within a CNT possesses pi bonds, pi-stacking occurs between nearby CNTs 12. As pure CNT-NSMs (such as sheet 10) do not contain adhesives, resins and polymers, they are sometimes referred to as "dry" sheets.

As shown in the Figure, air voids 14 are present between some adjacent CNTs 12. Air voids 14 present in sheet 10 increase the resistivity (and reduce the conductivity, which is inversely proportional to the resistivity) of sheet 10. Air voids 14 are present in commercially available CNT-NSMs to such an extent that they increase the resistivity of sheet 10 and render them unsuitable for many anti-icing and de-icing applications on aircraft. For example, the lowest claimed resistivity of one commercially available, off-the-shelf CNT-NSM is about 0.4 ohms per square (Ω/sq). For some aircraft components, such as rotor blades, the resistivity of a heating element should be 0.1 Ω/sq or lower to provide sufficient anti-icing and/or de-icing. As disclosed herein, pressure is applied to commercially available CNT-NSMs to remove air voids 14 present in sheet 10 to decrease the resistivity of sheet 10. The application of pressure makes sheet 10 suitable for additional heating applications for which untreated CNT-NSMs are not.

Pressure can be applied to CNT nonwoven sheet 10 using different methods. In one embodiment, pressure is applied to sheet 10 using a machine press. The machine press can include two opposing plates that are pressed together with sheet 10 positioned between the two plates. As pressure is applied to sheet 10 by the plates, the size and/or number of air voids 14 present within sheet 10 are reduced. Reducing the size and number of air voids 14 in sheet 10 allows CNTs 12 within sheet 10 to be positioned closer together, thereby reducing the resistivity of sheet 10. The amount of pressure applied to sheet 10 by the plates can vary depending on the amount of air voids 14 present in sheet 10 and the amount of air voids 14 desired in sheet 10 after pressing. In some embodiments, the applied pressure can be about 689 kPa (100 psi). In theory, the applied pressure can be as high as possible as long as air voids 14 are being reduced in size and/or number and significant damage to sheet 10 is avoided.

To prevent the plates of the machine press from "sticking" to sheet 10 and possibly damaging sheet 10, a layer of foil or other material can be positioned on one or both sides of sheet 10 prior to pressing. For example, sheet 10 can be sandwiched between two layers of aluminum foil. In some cases, the side of the aluminum foil that contacts sheet 10 can be coated with polytetrafluoroethylene or another low surface energy material to prevent sheet 10 from sticking to the aluminum foil during or after pressing. Additionally, one or both of the plates can include a surface pattern that has one or more protrusions or recesses to provide greater or lesser pressure application at various locations of sheet 10. The surface pattern(s) allow for localized areas of varying resistivity on sheet 10. Sheet 10 then can be used in applications where varying resistivity of a heating element is desirable.

Heat energy is applied to sheet 10 during the application of pressure to sheet 10, and heat energy can also be applied to sheet 10 before or after the application of pressure to sheet 10. The application of heat may further aid in the reduction of the size and/or number of air voids 14 present within sheet 10. One or both of the opposing plates of the machine press can be heated such that when the plates are pressed together, both pressure and heat energy is delivered to sheet 10. This pressure and heat energy are applied to sheet 10 essentially simultaneously. In some embodiments, the plates can be heated to a temperature of about 100 °C (212 °F). In theory, sheet 10 can be heated to a temperature as high as possible as long as air voids 14 are being reduced in size and/or number and significant damage to sheet 10 is avoided. In the case of heating sheet 10 before or after pressing, sheet 10 can be heated to a temperature within the above range.

In another embodiment, pressure is applied to sheet 10 using a set of nip rollers. Nip rollers are cylindrical rollers through which sheet 10 is fed. The outer diameter surfaces of two nip rollers are separated by a distance that is less than the thickness of sheet 10. The distances between the outer diameter surfaces of the nip rollers can vary along the interfacing length of the nip rollers. As sheet 10 passes between the two nip rollers, pressure is applied by the nip rollers to sheet 10. The pressures disclosed above with respect to the machine press can also be applied by a set of nip rollers. A set of nip rollers includes two or more rollers through which sheet 10 passes. The set of nip rollers can be heated in a fashion similar to the plates of a machine press to add heat energy at the time pressure is applied to sheet 10.

In another embodiment, an autoclave is used to apply pressure to sheet 10. Sheet 10 is positioned within the pressure chamber of an autoclave and sheet 10 is subjected to elevated pressure and temperature within the autoclave. The pressures and temperatures disclosed above with respect to the machine press can also be applied by an autoclave.

The methods of pressure application disclosed above describe the application of pressure to a pure CNT-NSM, such as CNT nonwoven sheet 10. The same methods can also be applied to a CNT nonwoven sheet that includes a backing material. The CNT nonwoven sheet can be layered on top of or beneath a backing material layer or sheet. The combined CNT nonwoven sheet and backing material can then be pressed using a machine press or set of nip rollers or positioned in an autoclave for pressure application. Alternatively, the backing material can be attached to a CNT nonwoven sheet by an adhesive or resin and then pressed or autoclaved. Suitable backing materials include glass fibers and pre-pregs (e.g., composite fibers in an epoxy matrix).

While the instant disclosure refers particularly to carbon nanotubes, it is theorized that the resistivity of sheets containing other electrically conductive carbon allotropes (*e.g.,* graphene nanoribbons) would behave in a similar fashion. Embodiments containing other suitable carbon allotropes are within the scope of the instant disclosure.

The methods disclosed herein provide means for reducing the resistivity of CNT-NSMs without increasing their mass or the chemical processes needed to add resistivity-reducing functional groups to the carbon backbone of the CNT materials. The disclosure allows commercially available CNT-NSMs to be useful for aerospace and aircraft anti-icing and de-icing applications.

### Discussion of Possible Embodiments

The following are non-exclusive descriptions of possible embodiments of the present invention.

A method for reducing the resistivity of a carbon nanotube nonwoven sheet can include providing a carbon nanotube nonwoven sheet comprising a plurality of carbon nanotubes, applying pressure to the carbon nanotube nonwoven sheet to reduce air voids between carbon nanotubes within the carbon nanotube nonwoven sheet, and heating the carbon nanotube nonwoven sheet, wherein the steps of applying pressure to the carbon nanotube nonwoven sheet and heating the carbon nanotube nonwoven sheet occur simultaneously.

The method of the preceding paragraph can optionally include, additionally and/or alternatively, any one or more of the following features, configurations and/or additional components:

The step of applying pressure to the carbon nanotube nonwoven sheet can be performed using a machine press.

The method can further include layering a foil on a side of the carbon nanotube nonwoven sheet prior to applying pressure to the carbon nanotube nonwoven sheet.

The foil can include aluminum and polytetrafluoroethylene.

The step of applying pressure to the carbon nanotube nonwoven sheet can be performed using a set of nip rollers.

The step of applying pressure to the carbon nanotube nonwoven sheet can be performed using an autoclave.

The carbon nanotube nonwoven sheet can include a plurality of carbon nanotubes held together by Van der Waals forces, and applying pressure to the carbon nanotube nonwoven sheet can reduce spacing between at least some adjacent carbon nanotubes.

The carbon nanotube nonwoven sheet can contain no adhesives or resins.

The carbon nanotube nonwoven sheet can be attached to a backing material.

The backing material can include glass fibers.

The backing material can include a pre-preg layer.

The carbon nanotube nonwoven sheet can consist essentially of carbon nanotubes.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for reducing the resistivity of a carbon nanotube nonwoven sheet, the method comprising:
providing a carbon nanotube nonwoven sheet comprising a plurality of carbon nanotubes;
applying pressure to the carbon nanotube nonwoven sheet to reduce air voids between carbon nanotubes within the carbon nanotube nonwoven sheet, and heating the carbon nanotube nonwoven sheet, wherein the steps of applying pressure to the carbon nanotube nonwoven sheet and heating the carbon nanotube nonwoven sheet occur simultaneously.

2. The method of claim 1, wherein the step of applying pressure to the carbon nanotube nonwoven sheet is performed using a machine press.

3. The method of claim 1 or claim 2, further comprising:
layering a foil on a side of the carbon nanotube nonwoven sheet prior to applying pressure to the carbon nanotube nonwoven sheet.

4. The method of claim 3, wherein the foil comprises aluminum and polytetrafluoroethylene.

5. The method of any one of claims 1 to 4, wherein the step of applying pressure to the carbon nanotube nonwoven sheet is performed using a set of nip rollers.

6. The method of any one of claims 1 to 4, wherein the step of applying pressure to the carbon nanotube nonwoven sheet is performed using an autoclave.

7. The method of any one of claims 1 to 6, wherein the carbon nanotube nonwoven sheet comprises a plurality of carbon nanotubes held together by Van der Waals forces, and wherein applying pressure to the carbon nanotube nonwoven sheet reduces spacing between at least some adjacent carbon nanotubes.

8. The method of any one of claims 1 to 7, wherein the carbon nanotube nonwoven sheet contains no adhesives or resins.

9. The method of any one of claims 1 to 8, wherein the carbon nanotube nonwoven sheet is attached to a backing material.

10. The method of claim 9, wherein the backing material comprises glass fibers.

11. The method of claim 9 or claim 10, wherein the backing material comprises a pre-preg layer.

12. The method of any one of claims 1 to 11, wherein the carbon nanotube nonwoven sheet consists essentially of carbon nanotubes.

## Patentansprüche

1. Verfahren zum Vermindern der Resistivität eines Kohlenstoffnanoröhren-Vliesstoff-Flächengebildes, wobei das Verfahren Folgendes umfasst:
Bereitstellen eines Kohlenstoffnanoröhren-Vliesstoff-Flächengebildes, das eine Vielzahl von Kohlenstoffnanoröhren umfasst;
Aufbringen von Druck auf das Kohlenstoffnanoröhren-Vliesstoff-Flächengebilde zum Reduzieren von Luftporen zwischen Kohlenstoffnanoröhren in dem Kohlenstoffnanoröhren-Vliesstoff-Flächengebilde und Erwärmen des Kohlenstoffnanoröhren-Vliesstoff-Flächengebildes, wobei die Schritte des Aufbringens von Druck auf das Kohlenstoffnanoröhren-Vliesstoff-Flächengebilde und des Erwärmens des Kohlenstoffnanoröhren-Vliesstoff-Flächengebildes gleichzeitig erfolgen.

2. Verfahren nach Anspruch 1, wobei der Schritt des Aufbringens von Druck auf das Kohlenstoffnanoröhren-Vliesstoff-Flächengebilde unter Verwendung einer Maschinenpresse durchgeführt wird.

3. Verfahren nach Anspruch 1 oder Anspruch 2, ferner umfassend:
Beschichten einer Seite des Kohlenstoffnanoröhren-Vliesstoff-Flächengebildes mit einer Folie vor dem Aufbringen von Druck auf das Kohlenstoffnanoröhren-Vliesstoff-Flächengebilde.

4. Verfahren nach Anspruch 3, wobei die Folie Aluminium und Polytetrafluorethylen umfasst.

5. Verfahren nach einem der Ansprüche 1 bis 4, wobei der Schritt des Aufbringens von Druck auf das Kohlenstoffnanoröhren-Vliesstoff-Flächengebilde unter Verwendung eines Satzes von Andruckwalzen durchgeführt wird.

6. Verfahren nach einem der Ansprüche 1 bis 4, wobei der Schritt des Aufbringens von Druck auf das Kohlenstoffnanoröhren-Vliesstoff-Flächengebilde unter Verwendung eines Autoklavs durchgeführt wird.

7. Verfahren nach einem der Ansprüche 1 bis 6, wobei das Kohlenstoffnanoröhren-Vliesstoff-Flächengebilde eine Vielzahl von Kohlenstoffnanoröhren umfasst, die durch Van-der-Waals-Kräfte zusammengehalten werden, und wobei das Aufbringen von Druck auf das Kohlenstoffnanoröhren-Vliesstoff-Flächengebilde die Abstände zwischen zumindest einigen benachbarten Kohlenstoffnanoröhren verringert.

8. Verfahren nach einem der Ansprüche 1 bis 7, wobei das Kohlenstoffnanoröhren-Vliesstoff-Flächengebilde keine Klebstoffe oder Harze enthält.

9. Verfahren nach einem der Ansprüche 1 bis 8, wobei das Kohlenstoffnanoröhren-Vliesstoff-Flächengebilde an einem Trägermaterial angebracht ist.

10. Verfahren nach Anspruch 9, wobei das Trägermaterial Glasfasern umfasst.

11. Verfahren nach Anspruch 9 oder Anspruch 10, wobei das Trägermaterial eine vorimprägnierte Schicht umfasst.

12. Verfahren nach einem der Ansprüche 1 bis 11, wobei das Kohlenstoffnanoröhren-Vliesstoff-Flächengebilde im Wesentlichen aus Kohlenstoffnanoröhren besteht.

## Revendications

1. Procédé destiné à réduire la résistivité d'une feuille non tissée de nanotubes de carbone, le procédé comprenant :
la fourniture d'une feuille non tissée de nanotubes de carbone comprenant une pluralité de nanotubes de carbone ;
l'application d'une pression sur la feuille non tissée de nanotubes de carbone afin de réduire les vides d'air entre les nanotubes de carbone à l'intérieur de la feuille non tissée de nanotubes de carbone, et le chauffage de la feuille non tissée de nanotubes de carbone, dans lequel les étapes d'application d'une pression sur la feuille non tissée de nanotubes de carbone et de chauffage de la feuille non tissée de nanotubes de carbone sont effectuées simultanément.

2. Procédé selon la revendication 1, dans lequel l'étape d'application d'une pression sur la feuille non tissée de nanotubes de carbone est effectuée à l'aide d'une presse.

3. Procédé selon la revendication 1 ou la revendication 2, comprenant en outre :
la superposition d'une feuille sur un côté de la feuille non tissée de nanotubes de carbone avant d'appliquer une pression sur la feuille non tissée de nanotubes de carbone.

4. Procédé selon la revendication 3, dans lequel la feuille comprend de l'aluminium et du polytétrafluoroéthylène.

5. Procédé selon l'une quelconque des revendications 1 à 4, dans lequel l'étape d'application d'une pression sur la feuille non tissée de nanotubes de carbone est effectuée à l'aide d'un ensemble de rouleaux pinceurs.

6. Procédé selon l'une quelconque des revendications 1 à 4, dans lequel l'étape d'application d'une pression sur la feuille non tissée de nanotubes de carbone est effectuée à l'aide d'un autoclave.

7. Procédé selon l'une quelconque des revendications 1 à 6, dans lequel la feuille non tissée de nanotubes de carbone comprend une pluralité de nanotubes de carbone maintenus ensembles par des forces de Van der Waals, et dans lequel l'application d'une pression sur la feuille non tissée de nanotubes de carbone réduit l'espacement entre au moins certains nanotubes de carbone adjacents.

8. Procédé selon l'une quelconque des revendications 1 à 7, dans lequel la feuille non tissée de nanotubes de carbone ne contient pas d'adhésif ni de résine.

9. Procédé selon l'une quelconque des revendications 1 à 8, dans lequel la feuille non tissée de nanotubes de carbone est fixée à un matériau de support.

10. Procédé selon la revendication 9, dans lequel le matériau de support comprend des fibres de verre.

11. Procédé selon la revendication 9 ou la revendication 10, dans lequel le matériau de support comprend une couche préimprégnée.

12. Procédé selon l'une quelconque des revendications 1 à 11, dans lequel la feuille non tissée de nanotubes de carbone est essentiellement constituée de nanotubes de carbone.
